# DEMANDE DE BREVET EUROPEEN

(11) **EP 0 853 892 A2**
(43) Date de publication de la demande: **22.07.1998**
(21) Numéro de dépôt: 98870005.0
(22) Date de dépôt: 15.01.1998
(51) Int. Cl.: A23N 15/00

(54) **Machine pour couper le coeur des choux-fleurs**

(30) Priorité: 17.01.1997 BE 9700051
(71) Demandeur: Verhoest, Marc, 8800 Rumbeke (BE)
(72) Inventeur: Verhoest, Marc, 8800 Rumbeke (BE)
(74) Mandataire: Powis de Tenbossche, Roland

(57) **Abrégé**

Machine pour couper le coeur de choux-fleurs, ladite machine comportant :
- un châssis;
- une bande de transport (1) avec réceptacles (2) entraînée par un moteur (5);
- un support (6) portant une série de moteurs (16) entraînant chacun en rotation un arbre (18) portant des moyens de coupe (20);
- un moyen (9) agissant sur ledit support (6) et/ou sur la bande de transport (1) pour assurer un déplacement relatif des moteurs (16) et des moyens de coupe (20) par rapport à la bande de transport (1), ledit moyen (9) assurant le déplacement (B) d'un moyen de coupe entraîné par un moteur vers un réceptacle (2) de la bande avant de couper le coeur du chou-fleur placé dans ledit réceptacle, le déplacement (H) dudit moteur et dudit moyen de coupe à une vitesse sensiblement égale à la vitesse de déplacement de la bande lors de la coupe du coeur du chou-fleur placé dans ledit réceptacle, et l'éloignement (E) du moyen de coupe et du moteur après la coupe du coeur du chou-fleur placé dans ledit réceptacle.

## Description

La présente invention a pour objet une machine pour couper le coeur de choux-fleurs, ladite machine comportant :
- un châssis de préférence mobile;
- une bande de transport pour porter et transporter les choux-fleurs, ladite bande étant portée par ledit châssis et comportant une série de réceptacles pour recevoir un chou-fleur;
- un moteur pour entraîner ladite bande en mouvement pour déplacer les choux-fleurs placés dans les dits réceptacles;
- un support portant une série de moteurs entraînant chacun en rotation un arbre portant des moyens de coupe du coeur de choux-fleurs ;
- un dispositif entraînant en mouvement continu ou sensiblement continu dans un même sens le support ;
- un moyen agissant sur ledit support et/ou sur la bande de transport pour assurer un déplacement relatif par rapport à la bande de transport des moteurs et les moyens de coupe, ledit moyen assurant le déplacement d'un moyen de coupe entraîné par un moteur vers un réceptacle de la bande avant de couper le coeur du chou-fleur placé dans ledit réceptacle, le déplacement dudit moteur et dudit moyen de coupe à une vitesse sensiblement égale à la vitesse de déplacement de la bande lors de la coupe du coeur du chou-fleur placé dans ledit réceptacle, et l'éloignement du moyen de coupe et du moteur après la coupe du coeur du chou-fleur placé dans ledit réceptacle.

Par le document BE-A-900625, on connaît une machine pour retirer le coeur de choux-fleurs juste après leur récolte. Cette machine comporte des bras de préhension du chou et un système à couteaux rotatifs se déplaçant selon un mouvement de va-et-vient pour couper le coeur d'un chou. Cette machine ne permet pas de traiter un grand nombre de choux à l'heure.

La présente invention a pour objet une machine permettant de traiter un grand débit de choux à l'heure, puisque les choux à traiter sont simplement déplacés par une bande de transport pourvue de réceptacles. De plus, dans la machine suivant l'invention, le support portant la série de moteurs entraînant en rotation un arbre muni de moyens de coupe est entraîné en mouvement continu ou sensiblement continu dans un même sens. Ce mouvement de préférence continu est avantageux pour assurer un traitement continu et régulier des choux. Après la coupe du coeur du chou-fleur et l'élimination de son pied, les fleurs ou parties charnues du chou-fleur sont séparées les une des autres.

La machine suivant l'invention est telle que définie dans le premier paragraphe du présent mémoire.

De façon avantageuse, les moteurs entraînant les moyens de coupe sont reliés chacun par une articulation audit support, lesdites articulations assurant que les arbres des moteurs soient toujours sensiblement verticaux, de préférence avec les moyens de coupe tournés vers le bas, malgré le déplacement relatif du support par rapport à la bande.

En particulier, le moyen agissant sur le support comporte un système d'entraînement dudit support pour déplacer sensiblement dans un même plan vertical les moteurs entraînant les moyens de coupe. Un tel système d'entraînement aurait par exemple pu être dans le cas d'un support constitué d'une bande portant les moteurs de coupe, un système entraînant et guidant ladite bande et guidant éventuellement (mais avantageusement la position de l'arbre des moteurs. Dans ce cas, ce système comporte des guides ou glissières pour déplacer les moteurs vers la bande de réceptacles, pour déplacer les moteurs parallèlement à ladite bande, et pour écarter les moteurs de ladite bande.

Selon une forme de réalisation avantageuse assurant que les arbres des moteurs soient toujours verticaux avec les moyens de coupe tournés vers le bas, le support comporte un premier et un deuxième disque verticaux et parallèles entre eux, lesdits disques étant montés sur un arbre entraîné en rotation par un moteur, lesdits disques présentant une série d'orifices livrant passage à des arbres, chaque arbre s'étendant entre un orifice du premier disque et un orifice du deuxième disque. Lesdits arbres partiellement engagés dans lesdits orifices présentent une première partie située dans la chambre définie entre lesdits disques et une deuxième partie située hors de ladite chambre, ladite première partie étant solidaire d'au moins un bras portant un moteur entraînant des moyens de coupe, tandis que ladite deuxième partie est solidaire d'une jambe. Chacune des jambes desdites deuxièmes parties des arbres est reliée par une articulation à une barre reliée par une articulation à une couronne présentant une ouverture centrale livrant passage à l'arbre d'entraînement desdits disques, ladite couronne assurant lors de la rotation des disques que les arbres sur lesquels sont montés les moyens de coupe sont tous sensiblement verticaux. Cette forme de réalisation est également avantageuse car elle est compacte et car le centre de gravité du système est à un niveau situé en dessous de l'arbre de rotation des disques, ceci assurant une bonne stabilité à la machine lors de son fonctionnement.

De préférence, l'ouverture centrale de la couronne est circulaire et présente un contour dont le diamètre est tel que la partie du contour située vers le haut touche ou est adjacente de l'arbre d'entraînement des disques. Cette forme est particulièrement avantageuse pour assurer une excellente stabilité et verticalité des arbres des moteurs et pour éviter des problèmes de balancement des arbres par rapport à la verticale.

La machine comporte avantageusement un nombre pair de moteurs entraînant les moyens de coupe. De préférence, elle comporte au moins 6 moteurs entraînant les moyens de coupe.

Avantageusement, chaque moteur entraînant en rotation un arbre portant des moyens de coupe du coeur de choux-fleurs est associé à un couvercle au travers duquel s'étend ledit arbre, ledit couvercle obturant la partie supérieure d'un réceptacle lors de la rotation de l'arbre par ledit moteur.

Selon une forme de réalisation avantageuse, chaque moteur entraînant en rotation un arbre portant des moyens de coupe est monté sur le support par l'intermédiaire d'un dispositif déplaçant verticalement le moteur lors de la rotation de l'arbre pour couper le coeur d'un chou.

Selon une autre forme de réalisation avantageuse, chaque arbre portant des moyens de coupe est associé au moteur par l'intermédiaire d'un dispositif déplaçant verticalement le moteur lors de la rotation de l'arbre pour couper le coeur d'un chou.

L'invention a encore pour objet un procédé pour couper le coeur de choux-fleurs lors de la récolte au moyen d'une machine suivant l'invention, dans lequel on place les choux récoltés dans les réceptacles de la bande de transport, on déplace les choux pour les amener en dessous d'un moteur entraînant en rotation des moyens de coupe, on déplace un moteur vers le choux ou on déplace le réceptacle vers le moteur, et on coupe ou pulvérise le coeur du chou par l'entraînement en rotation de l'arbre et des moyens de coupe par le moteur.

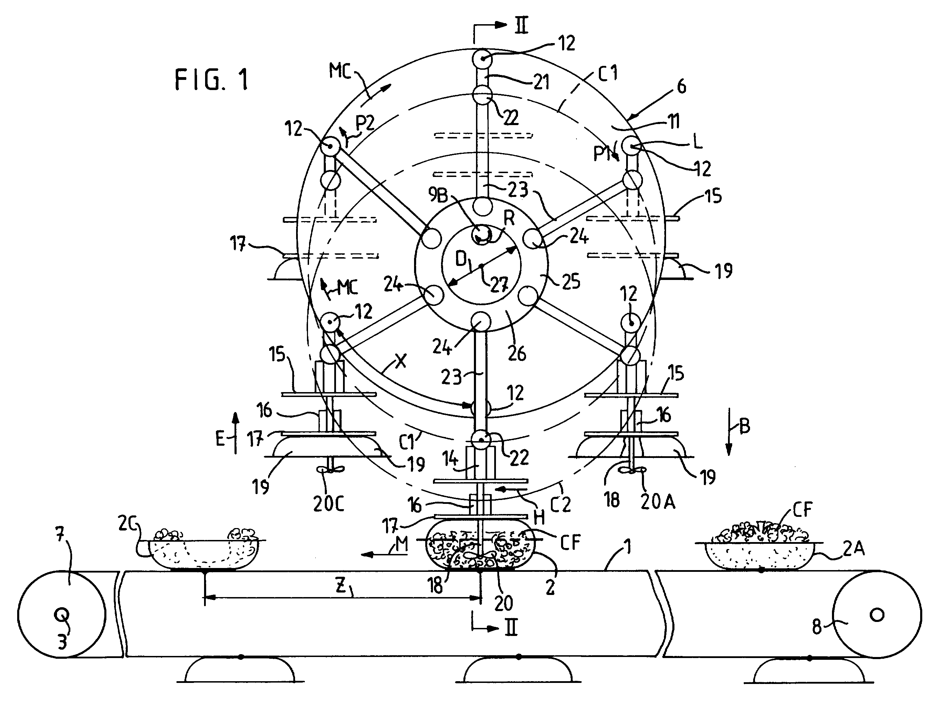

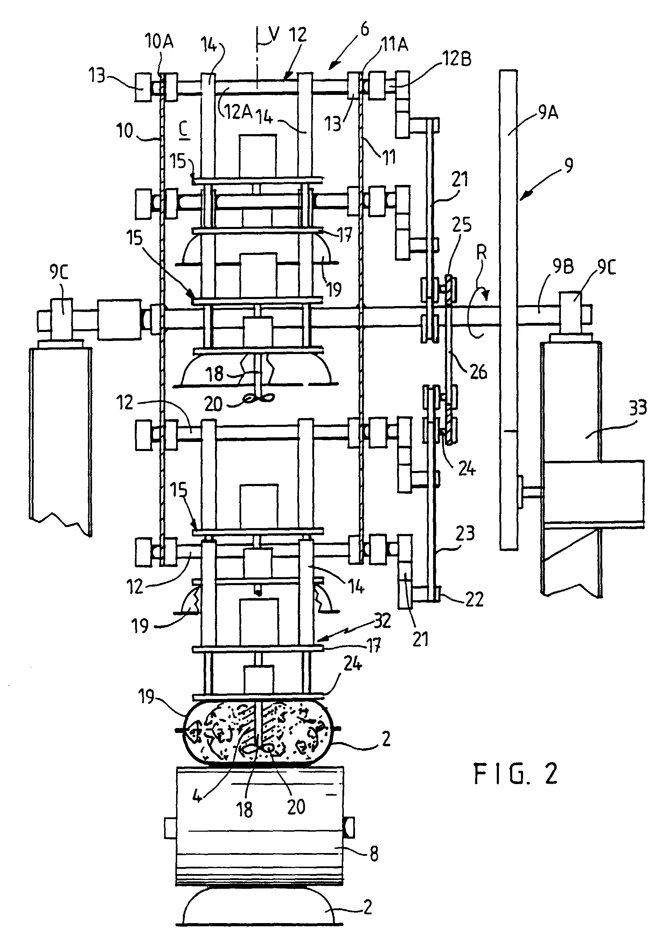

Des particularité et détails d'une partie d'une forme de réalisation d'une machine suivant l'invention ressortiront de la description détaillée suivante dans laquelle il est fait référence aux dessins ci-annexés. Dans ces dessins, la figure 1 est une vue latérale d'une partie d'une machine suivant l'invention, et la figure 2 est une vue en coupe selon la ligne II-II de la partie représentée à la figure 1.

La machine pour couper le coeur de choux-fleurs comporte :
- un châssis de préférence mobile;
- une bande de transport 1 pour porter et transporter les choux-fleurs CF, ladite bande 1 étant portée par ledit châssis et comportant une série de réceptacles 2 (par attachés par une articulation à la bande 1 pour permettre un pivotement de ceux-ci au niveau des rouleaux 7 et 8) recevant chacun un chou-fleur CF, ladite bande s'étendant entre deux rouleaux de renvoi 7,8;
- un moteur 3 entraînant en rotation le rouleau 7 pour entraîner ladite bande 1 en mouvement M pour déplacer les choux-fleurs CF placés dans les dits réceptacles 2;
- un support 6 portant une srie de moteurs 16 entraînant chacun en rotation un arbre 18 portant des moyens de coupe (couteaux, fraises. etc.) 20 du coeur de choux-fleurs ;
- un moyen 9 agissant sur ledit support 6 pour assurer un déplacement relatif par rapport à la bande de transport 1,des moteurs 16 et des moyens de coupe 20, ledit moyen assurant le déplacement vers le bas (B) d'un moyen de coupe 20A entraîné par un moteur vers un réceptacle 2A de la bande avant de couper le coeur du chou-fleur placé dans ledit réceptacle, le déplacement horizontal (H) dudit moteur 16 et dudit moyen de coupe 20 à une vitesse sensiblement égale à la vitesse de déplacement (M) de la bande 1 lors de la coupe du coeur du chou-fleur placé dans ledit réceptacle 2, et l'éloignement vers le haut (E) du moyen de coupe 20C et du moteur après la coupe du coeur du chou-fleur placé dans ledit réceptacle 2C.

Le moyen 9 comporte une roue (sensiblement verticale) d'entraînement 9A dudit support 6 pour déplacer sensiblement dans un même plan vertical V les moteurs 16 et les arbres 18 entraînant les moyens de coupe 20. Cette roue 9A est avantageusement entraînée par le moteur entraînant en rotation le rouleau 7.

La roue d'entraînement 9A est montée sur un arbre 9B dont les extrémités sont portées par des paliers 9C (la roue 9A et les paliers 9C ne sont représentés qu'à la figure 2), ledit arbre 9B portant un premier 10 et un deuxième disque 1 1 vertical et parallèle entre eux. Lesdits disques 10,11 sont ainsi entraînés en rotation par le moteur 33 entraînant en rotation la roue 9A. Lesdits disques 10.11 présentent une série d'orifices 10A,11A livrant passage à des arbres ou tiges 12. Chaque arbre ou tige 12 porte des butées 13 pour éviter des déplacements axiaux de la tige ou arbre 12 par rapport aux disques. Chaque arbre 12 s'étend entre un orifice 10A du premier disque 10 et un orifice 11A du deuxième disque 11. Lesdits arbres dont les extrémités sont partiellement engagés dans lesdits orifices 10A,11A présentent une première partie 12A située dans la chambre C définie entre lesdits disques 10,11 et une deuxième partie 12B située hors de ladite chambre C, ladite première partie 12A étant solidaire de deux bras 14 portant un plat 15 attaché à un plateau 17 sur lequel est monté moteur 16 entraînant des moyens de coupe20. Ledit plateau 17 porte également un couvercle 19 destiné à fermer le réceptacle 2 lors de la coupe du coeur d'un chou.

Ladite deuxième partie 12B de l'arbre ou tige 12 est solidaire d'une jambe 21. Chacune des jambes 21 desdites deuxièmes parties 12B des arbres est reliée par une articulation 22 à une barre 23 reliée par une articulation 24 à une couronne 25 présentant une ouverture centrale 26 livrant passage à l'arbre d'entraînement 9B desdits disques 10,11. Ladite couronne 25 assure lors de la rotation R des disques 10,11 que les arbres 18 sur lesquels sont montés les moyens de coupe 20 restent tous sensiblement verticaux.

L'ouverture centrale 26 de la couronne 25 est circulaire et présente un contour dont le diamètre D est tel que la partie 26A du contour située vers le haut touche ou est adjacente de l'arbre d'entraînement 9B des disques 10,11.

Les disques 10,11 sont reliés entre eux par six tiges 12 solidaires chacune d'un moteur 16. Les tiges 12 sont disposées de façon symétrique par rapport aux disques. Machine suivant l'une quelconque des revendications précédentes, caractérisée en ce qu'elle comporte un nombre pair de moteurs entraînant les moyens de coupe.

Lors du fonctionnement de la machine, la bande 1 déplace en continu les choux placés dans les réceptacles 2 dans le sens M. Les disques 10,11 montés sur l'arbre 9B sont entraînés en rotation R continu de manière à déplacer les arbres ou tiges 12 et donc les moteurs 16. Les tiges 12 subissent ainsi un mouvement circulaire MC. Lors de cette rotation la couronne 25 subit un mouvement de rotation autour d'un axe 27 excentré par rapport à l'axe de rotation de l'arbre 9B. Le mouvement circulaire MC des tiges 12 entraîne les moteurs 16 à effectuer un mouvement de déplacement le long d'un cercle C1 excentré par rapport à l'axe de l'arbre 9B. Lors de ce mouvement circulaire MC, les articulations 22 subissent un mouvement circulaire le long du cercle C2 excentré par à l'axe de l'arbre 9B. Lors de ce mouvement des tiges 12, les bras 14, les moteurs 16, les jambes, barres et couronne ( de par la force exercée par la gravité) entraîne un léger pivotement P1 (lors du mouvement vers le bas du moteur 16) et P2 (lors du mouvement vers le haut du moteur) de la tige autour de son axe longitudinal L. Ce léger pivotement des tiges 12 (qui forment des articulations pour les bras 14 et donc les moteurs 16 sur les disques 10,11) assure que les arbres 18 des moteurs 16 soient verticaux lors du mouvement des disques 10,11. Le mouvement de la couronne est dû aux jambes 21, aux barres 23 et aux articulations 22 et 24. La partie supérieure 26A du contour de l'ouverture 26 de la couronne 25 touche l'arbre 9B. Lors de la rotation des disques, l'arbre 18 de chaque moteur reste vertical. Lors de cette rotation, un moteur 16 est déplacé vers le bas B vers la bande 1, ce moteur 16 étant progressivement amené au dessus d'un réceptacle. Le couvercle associé audit moteur 16 obture ensuite le réceptacle. Lors de cette obturation, le moteur 16 est actionné pour couper le coeur du chou-fleur. Le moteur 16 (n'entraînant plus en rotation l'arbre 18) continue ensuite son mouvement pour s'écarter de la bande 1 et du réceptacle contenant le chou-fleur dont le coeur a été coupé.

La forme de réalisation représentée est avantageuse car elle est compacte et car le centre de gravité du système constitué de l'arbre 9B, de la roue 9A des disques 10,11, de la couronne 25, des moteurs 16, des moyens de coupe, des jambes et des barres 23 est situé sous l'arbre 9B, en fait au centre 27 du contour de l'ouverture 26. Ceci assure une bonne stabilité à la machine lors de son fonctionnement.

De plus, l'ouverture centrale 26 de la couronne 25 est circulaire et présente un contour dont le diamètre est tel que la partie du contour située vers le haut touche ou est adjacente de l'arbre d'entraînement des disques. Cette forme est particulièrement avantageuse pour assurer une excellente stabilité et verticalité des arbres des moteurs et pour éviter des problèmes de balancement des arbres par rapport à la verticale.

L'écartement Z entre deux réceptacles 2 de la bande 1 correspond à la distance circulaire X séparant deux tiges 12 successives.

Dans des formes de réalisation possibles, chaque moteur entraînant en rotation un arbre portant des moyens de coupe est monté sur le support par l'intermédiaire d'un dispositif déplaçant verticalement le moteur lors de la rotation de l'arbre pour couper le coeur d'un chou.

Selon d'autres formes de réalisation possible, chaque arbre portant des moyens de coupe est associé au moteur par l'intermédiaire d'un dispositif déplaçant verticalement le moteur lors de la rotation de l'arbre pour couper le coeur d'un chou.

Ces deux formes de réalisation possibles permettent d'adapter la profondeur de coupe dans les choux-fleurs ou d'assurer un léger mouvement vers le bas du moyen de coupe lors de l'opération de coupe.

## Revendications

1. Machine pour couper le coeur de choux-fleurs, ladite machine comportant :
• un châssis de préférence mobile;
• une bande de transport (1) pour porter et transporter les choux-fleurs (CF), ladite bande (1) étant portée par ledit châssis et comportant une série de réceptacles (2) pour recevoir un chou-fleur;
• un moteur (5) pour entraîner ladite bande (1) en mouvement pour déplacer les choux-fleurs placés dans les dits réceptacles (2);
• un support (6) portant une série de moteurs (16) entraînant chacun en rotation un arbre (18) portant des moyens de coupe (20) du coeur de choux-feurs ;
• un moyen (9) agissant sur ledit support (6) et/ou sur la bande de transport (1) pour assurer un déplacement relatif par rapport à la bande de transport (1),des moteurs (16) et des moyens de coupe (20), ledit moyen (9) assurant le déplacement (B) d'un moyen de coupe entraîné par un moteur vers un réceptacle (2) de la bande avant de couper le coeur du chou-fleur placé dans ledit réceptacle, le déplacement (H) dudit moteur et dudit moyen de coupe à une vitesse sensiblement égale à la vitesse de déplacement de la bande lors de la coupe du coeur du chou-fleur placé dans ledit réceptacle, et l'éloignement (E) du moyen de coupe et du moteur après la coupe du coeur du chou-fleur placé dans ledit réceptacle.

2. Machine suivant la revendication 1, caractérisée en ce que les moteurs (16) entraînant les moyens de coupe (20) sont reliés chacun par une articulation (12) audit support (6), lesdites articulations (12) assurant que les arbres (18) des moteurs (16) soient toujours sensiblement verticaux (V) malgré le déplacement relatif du support (6) par rapport à la bande (1).

3. Machine suivant la revendication 2, caractérisée en ce que le moyen (9) comporte un système d'entraînement (9A) dudit support pour déplacer sensiblement dans un même plan vertical les moteurs entraînant les moyens de coupe.

4. Machine suivant la revendication 2 ou 3, caractérisée en ce que le support (6) comporte un premier (10) et un deuxième disque (11) verticaux et parallèles entre eux, lesdits disques (10,11) étant montés sur un arbre (9B) entraîné en rotation par un moteur, lesdits disques (10,11) présentant une série d'orifices (10A,11A) livrant passage à des arbres, chaque arbre (12) s'étendant entre un orifice (10A) du premier disque (10) et un orifice (11A) du deuxième disque (11), en ce que lesdits arbres (12) partiellement engagés dans lesdits orifices (10A,11A) et montés à pivotement par rapport auxdits orifices présentent une première partie (12A) située dans la chambre (C) définie entre lesdits disques (10,11) et une deuxième partie (12B) située hors de ladite chambre, ladite première partie étant solidaire d'au moins un bras (14) portant un moteur (16) entraînant des moyens de coupe (20), tandis que ladite deuxième partie (12B) est solidaire d'une jambe (21), et en ce que chacune des jambes (21) desdites deuxièmes parties des arbres est reliée par une articulation (22) à une barre (23) reliée par une articulation (24) à une couronne (25) présentant une ouverture centrale (26) livrant passage à l'arbre (9B) d'entraînement desdits disques, ladite couronne (25) assurant lors de la rotation des disques que les arbres (18) sur lesquels sont montés les moyens de coupe (20) sont tous sensiblement verticaux.

5. Machine suivant la revendication 4, caractérisée en ce que l'ouverture centrale (26) de la couronne est circulaire et présente un contour dont le diamètre (D) est tel que la partie (26A) du contour située vers le haut touche ou est adjacente de l'arbre (9B) d'entraînement des disques (10,11).

6. Machine suivant l'une quelconque des revendications précédentes, caractérisée en ce qu'elle comporte un nombre pair de moteurs (16) entraînant les moyens de coupe.

7. Machine suivant la revendication 6, caractérisée en ce qu'elle comporte au moins 6 moteurs (16) entraînant les moyens de coupe.

8. Machine suivant l'une des revendications précédentes, caractérisée en ce que chaque moteur (16) entraînant en rotation un arbre portant des moyens de coupe du coeur de choux-fleurs est associé à un couvercle (19) au travers duquel s'étend ledit arbre, ledit couvercle obturant la partie supérieure d'un réceptacle (2) lors de la rotation de l'arbre (18) par ledit moteur (16).

9. Machine suivant l'une quelconque des revendications précédentes, caractérisée en ce que chaque moteur (16) entraînant en rotation un arbre portant des moyens de coupe est monté sur le support par l'intermédiaire d'un dispositif déplaçant verticalement le moteur lors de la rotation de l'arbre pour couper le coeur d'un chou.

10. Machine suivant l'une des revendications 1 à 8, caractérisée en ce que chaque arbre (18) portant des moyens de coupe est associé au moteur par l'intermédiaire d'un dispositif déplaçant verticalement le moteur lors de la rotation de l'arbre pour couper le coeur d'un chou.

11. Procédé pour couper le coeur de choux-fleurs lors de la récolte au moyen d'une machine suivant l'une des revendications précédentes, dans lequel on place les choux récoltés dans les réceptacles de la bande de transport, on déplace les choux pour les amener en dessous d'un moteur entraînant en rotation des moyens de coupe, on déplace un moteur vers le choux ou on déplace le réceptacle vers le moteur, et on coupe ou pulvérise le coeur du chou par l'entraînement en rotation de l'arbre et des moyens de coupe par le moteur.
